# EUROPÄISCHE PATENTSCHRIFT

(11) **EP 2 619 465 B1**
(45) Veröffentlichungstag und Bekanntmachung des Hinweises auf die Patenterteilung: **14.01.2015**
(21) Anmeldenummer: 11761513.8
(22) Anmeldetag: 22.09.2011
(51) Int. Cl.: F16C 1/02, H01Q 3/32, H01Q 1/24, H01Q 1/52

(54) **INTERMODULATIONSFESTE BIEGSAME WELLE MIT ELEKTRISCH ISOLIERENDEN, BESCHICHTETEN DRÄHTEN**
INTERMODULATION RESISTANT FLEXIBLE SHAFT WITH WIRES HAVING ELECTRICAL INSULATING COATING
ARBRE FLEXIBLE RÉSISTANT À LA INTERMODULATION AVEC COUCHE D'ISOLATION ÉLECTRIQUE

(30) Priorität: 24.09.2010 DE 102010046446
(43) Veröffentlichungstag der Anmeldung: 31.07.2013
(73) Patentinhaber: Kathrein-Werke KG, 83022 Rosenheim (DE)
(72) Erfinder: STANISZEWSKI, Walter, 83229 Aschau (DE); BERGER, Stefan, 83101 Thansau-Rohrdorf (DE); HÄNTSCH, Ralf, 83064 Raubling (DE); POLSTER, Hubert, 85551 Kirchheim (DE)
(74) Vertreter: Bauer, Friedrich
(86) Internationale Anmeldenummer: PCT/EP2011/004754
(87) Internationale Veröffentlichungsnummer: WO 2012/038086

(56) Entgegenhaltungen:
- DE-B3-102011 009 600
- GB-A- 943 437
- GB-A- 2 015 699
- US-A- 3 559 693
- US-A- 4 475 820
- US-A1- 2004 087 379

## Beschreibung

Die Erfindung betrifft eine biegsame Welle zum Übertragen von Drehmomenten.

Biegsame Wellen sind seit langem bekannte Maschinenelemente zur Übertragung von Drehmomenten, wenn Antrieb und Antrieb nicht fluchten, d.h. zueinander versetzt sind, oder wenn ortsveränderliche Maschinen oder Vorrichtungen mit kleiner Leistung angetrieben werden sollen. Biegsame Wellen können dabei die Drehbewegung auf sehr gleichförmige Weise übertragen, sind unempfindlich gegenüber Umweltbedingungen und gegenüber Antriebssträngen mit starren Wellen, Umlenkgetrieben, beweglichen Kupplungen etc. weit kostengünstiger. Besondere Vorteile von biegsamen Wellen liegen weiterhin darin, dass enge Biegeradien, das Verlegen mit mehreren Biegungen und der Einbau bei begrenzten Platzverhältnissen möglich sind. Darüber hinaus können biegsame Wellen auch Längenänderungen verschiedener Einzelteile in Folge Wärmeausdehnung ausgleichen. Sind biegsame Wellen als Hohlwellen ausgebildet, können auch elektrische oder optische Signale im Welleninneren übertragen werden.

Biegsame Wellen sind in einer Vielzahl von Ausführungen bekannt. Üblicherweise bestehen sie aus mehreren übereinander und mehrgängig gewickelten, abwechselnd schraubenförmig rechts- und linksgewundenen Lagen aus dünnen Metalldrähten, die meist aus Stahl, insbesondere aus Federstahl bestehen. Hochwertige biegsame Wellen erhält man durch nach dem Wickeln durchgeführte Wärmebehandlungen. Bei biegsamen Wellen können ebenso zumindest einzelne Lagen verdrillt (verseilt) oder geflochten sein, um dadurch höhere Druck- und Zugkräfte übertragen zu können oder um einen Seilzug auszubilden.

Biegsame Wellen werden aufgrund ihrer vorteilhaften Eigenschaften auch für Antriebs-, Verstell- oder Steuerungsaufgaben in elektronischen Geräten oder Antennen eingesetzt. Ein spezieller, in der nachveröffentlichten DE 10 2011 009 600 B3 der Anmelderin beschriebener Einsatzbereich besteht darin, in Antennen, insbesondere in Mobilfunkantennen, mittels biegsamer Wellen Phasenschieber zu verstellen, um die in der Antenne vorgesehene Strahlereinrichtung in ihrem Absenkwinkel (Down-Tilt-Winkel) in Elevationsrichtung bzw. den Abstrahlwinkel in Azimutrichtung spezifisch einzustellen. Der Phasenschieber ist hierbei über die biegsame Welle mit einem zugeordneten Aktuator (Elektromotor) mechanisch verbunden, der die erforderliche Drehbewegung der biegsamen Welle und damit die Verstellung des Phasenschiebers bewirkt.

Beim Einsatz von biegsamen Wellen in elektronischen Geräten und Antennen ist von Nachteil, dass sich während der Moment- bzw. Kraftübertragung oder auch im Ruhezustand durch Schwingungen, Erschütterungen und Temperaturschwankungen die Metalldrähte bzw. Einzeladern der biegsamen Welle an undefinierten Stellen berühren, wodurch in den elektronischen Geräten oder Antennen unerwünschte Intermodulationsprodukte auftreten. Derartige Intermodulationsoder Störprodukte senken bei Antennen die Übertragungskapazität.

Aus der US 3,559,693 A ist eine biegsame Welle bekannt, bei der aus Metall bestehende Armierungsdrähte in eine gemeinsame, durchgehende Kunststoffschicht eingebettet werden. Die dort verwendete Kunststoffschicht soll verhindern, dass sich die einzelnen Windungen der Armierungslagen bei der Herstellung oder beim Gebrauch der biegsamen Welle übereinander schieben.

Aus der US 2004/0087379 A1 ist es bekannt, einzelne Lagen einer biegsamen Welle mit einem trockenen Schmierstoff zu beschichten, der eine Schicht über den gesamten Umfang der einzelnen Drähte bildet. Der Trockenschmierstoff dient dort zur Herabsetzung der Reibung zwischen den Lagen.

Aus der GB 2 015 699 A ist eine biegsame Welle bekannt, bei der die einzelnen Drähte zur Vermeidung unerwünschter Impedanzen aus einem thermoplastischen Monofilament bestehen. Auf Metalldrähte wird dort vollständig verzichtet.

Der Erfindung liegt daher die Aufgabe zugrunde, eine biegsame Welle zu schaffen, mit der unerwünschte Intermodulationsprodukte vermieden werden können.

Diese Aufgabe wird erfindungsgemäß durch eine biegsame Welle mit den Merkmalen des Anspruches 1 gelöst. Vorteilhafte Ausführungsformen der Erfindung sind in den weiteren Ansprüchen beschrieben.

Gemäß der Erfindung wird eine biegsame Welle zum Übertragen von Drehmomenten geschaffen, die mehrere schraubenförmig gewundene, eng aneinander anliegende Drähte aufweist, die in mehreren übereinander angeordnete Lagen und von Lage zu Lage wechselnder Wickelrichtung gewickelt sind. Die Drähte bestehen jeweils aus einem Metalldraht und einer elektrisch isolierender Isolierschicht, welche den Metalldraht über seinen gesamten Umfang umgibt und einen Metall-auf-Metall-Kontakt zwischen benachbarten Metalldrähten verhindert.

Mittels der Erfindung werden undefinierte Metallkontakte, d.h. elektrisch leitende Kontakte, zwischen den einzelnen Drähten der biegsamen Welle und damit unerwünschte Intermodulationen in elektronischen Geräten oder Antennen verhindert. Beeinträchtigungen der Übertragungskapazität bei Antennen können vermieden werden. Die Isolierschicht bietet weiterhin einen sehr guten Korrosionsschutz für die Metalldrähte, so dass ein Einsatz in agressiver Atmosphäre möglich ist. Weiterhin ist es möglich, die biegsame Welle in einem Metallrohr oder unter Verwendung von metallischen Lagerstellen zu verlegen, ohne dass eine Kontaktkorrosion auftreten kann oder ein elektrischer Kontakt zum Metallrohr oder den Lagerstellen erfolgt. Weiterhin verbessert die Isolierschicht sowohl die Gleiteigenschaften der einzelnen Drähte untereinander als auch der biegsamen Welle in einer Umhüllung, falls eine derartige Umhüllung vorgesehen ist.

Die im Rahmen der vorliegenden Erfindung verwendeten Begriffe "Metalldraht" bzw. "Draht" umfassen alle Arten von dünnen Drähten oder Adern, die zur Herstellung von biegsamen Wellen geeignet sind.

Es ist auch möglich, bei mehreren übereinander liegenden Lagen eine gesamte, innenliegende Lage mit einem zusätzlichen Isoliermantel zu versehen, welcher eine innenliegende Lage von einer benachbarten äußeren Lage elektrisch isoliert.

Vorteilhafterweise handelt es sich bei der Isolierschicht um eine gleichmäßig dünne, fest haftende, abriebfeste, nicht poröse und dehnbare elektrisch isolierende Schicht.

Gemäß einer vorteilhaften Ausführungsform der Erfindung hat die Isolierschicht eine Dicke von weniger als oder gleich 60 µm, insbesondere eine Dicke von weniger als 10 µm. Durch derartig dünne Isolierschichten vergrößert sich der Durchmesser der biegsamen Welle gegenüber herkömmlichen Ausführungen ohne Isolierung nur geringfügig.

Gemäß einer vorteilhaften Ausführungsform besteht die Isolierschicht aus einer Kunststoffummantelung oder einem Lacküberzug. Besonders vorteilhaft sind hierfür Hochtemperaturlacke oder PTFE (Polytetrafluorethylen), da diese Materialien eine Wärmebehandlung der Moment- und/oder Kraftübertragungseinrichtung nach dem Wickeln ermöglichen.

Besonders vorteilhaft ist es, wenn die Isolierschicht eine Temperaturfestigkeit von mindestens 240°C aufweist, da bei Temperaturen von über 240°C besonders wirksame Wärmebehandlungen der fertig gewickelten biegsamen Welle möglich sind.

Die Erfindung wird nachfolgend anhand der Zeichnungen näher erläutert. Es zeigen:
- Figur 1 :: einen teilweise abgewickelten Abschnitt einer biegsame Welle mit drei Lagen, und
- Figur 2 :: einen Längsschnitt durch einen Draht, der bei der biegsamen Welle von Figur 1 verwendet wird.

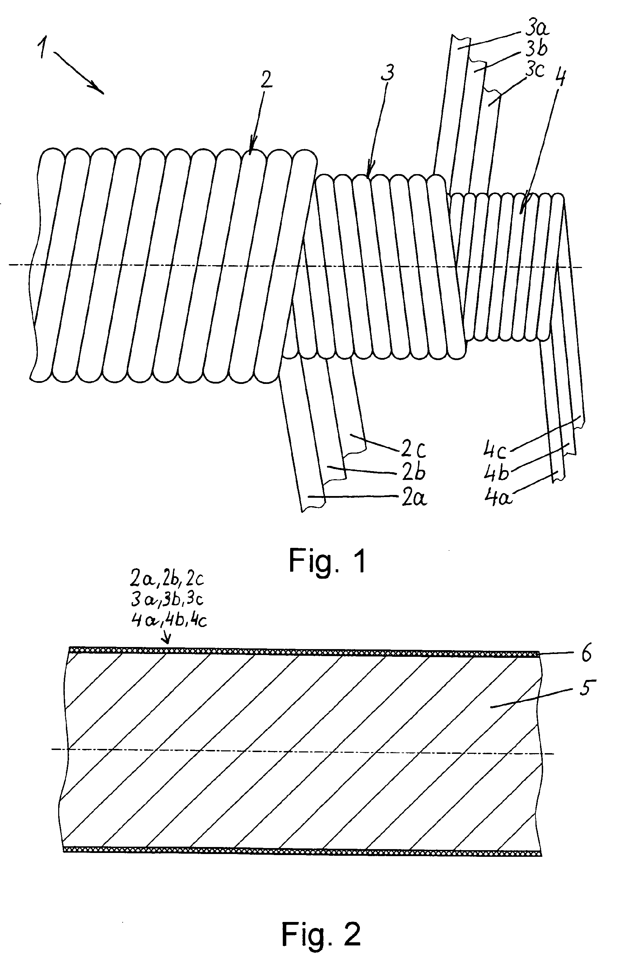

Aus Figur 1 ist ein teilweise abgewickelter Abschnitt eines flexiblen Drehmomentübertragungselements in der Form einer biegsame Welle 1 dargestellt.

Die biegsame Welle 1 ist dreilagig aufgebaut und weist eine äußere Lage 2, die durch drei Drähte 2a, 2b, 2c gebildet wird, eine mittlere Lage 3, die durch drei Drähte 3a, 3b, 3c gebildet wird, und eine innere Lage 4 auf, die durch drei Drähte 4a, 4b und 4c gebildet wird. Wie ersichtlich, sind die Lagen 2, 3, 4 schraubenförmig gewickelt, wobei die äußere Lage 2 und die innere Lage 4 die gleiche Wickelrichtung haben, während die mittlere Lage 3 entgegengesetzt gewickelt ist.

Die einzelnen Windungen einer jeden Lage 2, 3, 4 liegen dicht aneinander an. Weiterhin liegen auch die einzelnen Lagen 2, 3, 4 eng aufeinander.

Die Drähte 2a, 2b, 2c; 3a, 3b, 3c; 4a, 4b, 4c haben jeweils einen kreisförmigen Querschnitt. Es ist jedoch auch ohne weiteres möglich, Drähte mit einem anderen Querschnitt, insbesondere mit einem rechteckigen Querschnitt zu verwenden.

Wie aus Figur 2 ersichtlich, besteht jeder Draht 2a, 2b, 2c; 3a, 3b, 3c; 4a, 4b, 4c aus einem Metalldraht 5 und einer Isolierschicht 6, die den Metalldraht 5 über seinen gesamten Umfang umgibt. Diese Isolierschicht 6 besteht aus einem fest haftenden, abriebfesten, nicht porösen und dehnbaren elektrisch isolierenden Material, das derart beschaffen ist, dass die Isolierschicht 6 bei der Herstellung der biegsamen Welle 1 nicht zerstört wird. Vorteilhafterweise besteht die Isolierschicht 6 aus einem temperaturbeständigen Lack oder aus einer PTFE-Beschichtung.

Zum Wickeln der biegsamen Welle 1 werden somit Metalldrähte 5 verwendet, die bereits vorher einzeln mit einer entsprechenden fest haftenden Isolierschicht 6 überzogen worden sind. Auch dann, wenn die Drähte 2a, 2b, 2c; 3a, 3b, 3c; 4a, 4b, 4c eng aneinander anliegen, wie in Figur 1 gezeigt, sind die einzelnen Metalldrähte 5 sowohl im Ruhezustand als auch während einer mechanischen Belastung zueinander elektrisch isoliert. Bei Verwendung in elektronischen Geräten oder Antennen wird somit auch dann, wenn die einzelnen Windungen und Drähte eine Relativbewegung zueinander ausführen und aneinander reiben, keine Intermodulation hervorgerufen.

## Patentansprüche

1. Biegsame Welle zum Übertragen von Drehmomenten, mit mehreren schraubenförmig gewundenen, eng aneinander anliegenden Drähten (2a, 2b, 2c; 3a, 3b, 3c; 4a, 4b, 4c), die in mehreren übereinander angeordneten Lagen (2, 3, 4) und von Lage zu Lage wechselnder Wickelrichtung gewickelt sind und jeweils aus einem Metalldraht (5) und einer elektrisch isolierenden Isolierschicht (6) bestehen, welche den Metalldraht (5) über seinen gesamten Umfang umgibt und einen Metall-auf-Metall-Kontakt zwischen benachbarten Metalldrähten (5) verhindert.

2. Biegsame Welle nach Anspruch 1, **dadurch gekennzeichnet, dass** die Isolierschicht (6) eine Dicke von weniger als oder gleich 60 µm, insbesondere eine Dicke von weniger als 10 µm hat.

3. Biegsame Welle nach einem der vorhergehenden Ansprüche, **dadurch gekennzeichnet, dass** die Isolierschicht (6) aus einer Kunststoffummantelung oder einem Lacküberzug besteht.

4. Biegsame Welle nach einem der vorhergehenden Ansprüche, **dadurch gekennzeichnet, dass** die Isolierschicht (6) aus PTFE besteht.

5. Biegsame Welle nach einem der vorhergehenden Ansprüche, **dadurch gekennzeichnet, dass** die Isolierschicht (6) eine Temperaturfestigkeit von mindestens 240°C aufweist.

## Claims

1. Flexible shaft for transmitting torques, comprising a plurality of wires (2a, 2b, 2c; 3a, 3b, 3c; 4a, 4b, 4c) which lie closely against one another and are wound in a helical pattern, which wires are wound in a plurality of layers (2, 3, 4) which are arranged one above the other and in a winding direction that alternates from layer to layer, and each consists of a metal wire (5) and an electrically insulating insulation layer (6), which encloses the metal wire (5) over the entire extent thereof and prevents metal-to-metal contact between adjacent metal wires (5).

2. Flexible shaft according to claim 1, **characterised in that** the insulation layer (6) has a thickness of less than or equal to 60 µm, in particular a thickness of less than 10 µm.

3. Flexible shaft according to any of the preceding claims, **characterised in that** the insulation layer (6) is made of a plastics sheathing or a paint coating.

4. Flexible shaft according to any of the preceding claims, **characterised in that** the insulation layer (6) consists of PTFE.

5. Flexible shaft according to any of the preceding claims, **characterised in that** the insulation layer (6) has a temperature stability of at least 240°C.

## Revendications

1. Arbre flexible destiné à transmettre des couples de rotation, comprenant plusieurs fils enroulés en spirale et étroitement appliqués les uns contre les autres (2a, 2b, 2c ; 3a, 3b, 3c ; 4a, 4b, 4c), qui sont enroulés en plusieurs couches (2, 3, 4) agencées les unes au-dessus des autres et avec un sens d'enroulement alternant de couche à couche, et respectivement constitués d'un fil métallique (5) et d'une couche isolante (6) électriquement isolante, qui entoure le fil métallique (5) sur la totalité de sa périphérie et empêche un contact métal-sur-métal entre les fils métalliques voisins (5).

2. Arbre flexible selon la revendication 1, **caractérisé en ce que** la couche isolante (6) a une épaisseur inférieure ou égale à 60 µm, en particulier une épaisseur inférieure à 10 µm.

3. Arbre flexible selon l'une des revendications précédentes, **caractérisé en ce que** la couche isolante (6) est constituée d'un enrobage en matière plastique ou d'un revêtement de laque.

4. Arbre flexible selon l'une des revendications précédentes, **caractérisé en ce que** la couche isolante (6) est en PTFE.

5. Arbre flexible selon l'une des revendications précédentes, **caractérisé en ce que** la couche isolante (6) présente une résistance à la température d'au moins 240° C.
